# EUROPEAN PATENT APPLICATION

(11) **EP 4 838 188 A1**
(43) Date of publication of application: **11.11.2026**
(21) Application number: 25174713.5
(22) Date of filing: 07.05.2025
(51) Int. Cl.: G01J 3/02

(54) **SPECTROMETER KIT**

(71) Applicant: trinamiX GmbH, 67063 Ludwigshafen am Rhein (DE)
(72) Inventor: Prokop, Christoph, 67059 Ludwigshafen am Rhein (DE)
(74) Representative: Altmann Stößel Dick Patentanwälte PartG mbB

(57) **Abstract**

A spectrometer kit (110) is disclosed. The spectrometer kit (110) comprises
i) a portable spectrometer device (112) comprising at least one optical interface (118) configured for transmitting electromagnetic radiation impinging on the spectrometer device towards an optical detector (120), the optical detector (120) configured for generating at least one signal in response to the electro-magnetic radiation, at least one spectrometer control unit (122) for evaluating the at least one signal, at least one battery (124) configured for providing electrical energy to the spectrometer control unit (122); wherein the spectrometer device (112) is receivable within a portable spectrometer case (114);
ii) at least one sensor (116), wherein the sensor (116) is configured for generating at least one sensor signal in response to at least one condition of the spectrometer device (112);
iii) the spectrometer case (114) comprising at least one cleaning device (126) configured for cleaning at least the optical interface (118) of the spectrometer device (112), when the spectrometer device (112) is received within the spectrometer case (114), at least one conditioning device (128) configured for performing at least one conditioning action, wherein the conditioning action comprises, within the spectrometer case (114), exposing the spectrometer device (112) to a conditioning environment, at least one power device configured for charging the battery of the spectrometer device when the spectrometer device is received within the spectrometer case.

## Description

### Technical Field

The invention relates to a spectrometer kit. Spectrometer kits can, in general, be employed in various areas for sensing, investigating, monitoring and detecting purposes. For example, spectrometer kits may be employed in medical and physiological diagnostics and research as well as in quality control and in various other fields, such as for fire and/or smoke detection. However, further kinds of applications are feasible.

### Background art

Spectrometer devices are widely used in research, industry and customer applications, enabling multiple applications such as optical analysis and/or quality control. Use cases can be found for food, farming, pharma, medical, life sciences and many more. Generally, spectrometer devices are calibrated during manufacturing and are configured specifically for their intended applications. However, each of these use cases results in the spectrometer device being exposed to different environmental conditions. Furthermore, handheld and/or mobile spectrometer devices, due to being easily moved, may be applied for more than one use case and thus be exposed to a plurality of different environmental conditions. Thus, during continuous use and exposure to diverse environmental conditions, multiple factors such as physical damages, for example scratches, accumulation of dust, dirt, chemical residues and moisture within the spectrometer device as well as exposure to varying temperatures can potentially result in a shift in performance of the spectrometer device.

One generally accepted approach for overcoming this issue is a regular inspection and/or factory re-calibration as well as employing correction algorithms to prevent issues such as calibration and/or temperature drift.

However, it is not feasible to account for every conceivable condition during testing and calibration and thus, typically over time, even high-performance mobile spectrometers sometimes fail to maintain the necessary conditions to meet the performance requirements for which they were originally specified.

### Problem to be solved

It is therefore desirable to provide devices, which at least partially address above-mentioned technical challenges regarding the shift in performance of spectrometer devices. Specifically, a spectrometer kit shall be proposed which allows for a long lasting high performance of spectrometer devices ensuring high accuracy and reliability of measurement results generated by the spectrometer device.

### Summary

This problem is addressed by a spectrometer kit with the features of the independent claims. Advantageous embodiments, which might be realized in an isolated fashion or in any arbitrary combinations, are listed in the dependent claims as well as throughout the specification.

In a first aspect of the present invention, a spectrometer kit is disclosed. The spectrometer kit comprises a portable spectrometer device. The spectrometer device, specifically the portable spectrometer device as described herein, is receivable within a portable spectrometer case, as described in further detail below.

The term "spectrometer device" as used herein is a broad term and is to be given its ordinary and customary meaning to a person of ordinary skill in the art and is not to be limited to a special or customized meaning. The term specifically may refer, without limitation, to a device capable of optically analyzing at least one sample, thereby generating at least one item of information on at least one spectral property of the sample. Specifically, the term may refer to a device, which is capable of recording a signal intensity, e.g. an intensity of electromagnetic radiation, such as a light intensity, with respect to a corresponding wavelength of a spectrum or a partition thereof, such as a wavelength interval, wherein the signal intensity may, preferably, be provided as an electrical signal which may be used for further evaluation. The signal, e.g. the electrical signal, may specifically be generated by an optical detector of the spectrometer device, as will be outlined below, and may then be used for deriving the item of information on the spectral and/or optical property of the sample. The spectrometer device may also be referred to as "spectrometer". The portable spectrometer device may specifically be configured, by its dimensions and/or its weight, for being carried by a user with a single hand. For example, specifically in order to support one-handed handling of the spectrometer, the spectrometer may have at least one handle and/or grip and may be lightweight compared to other, known spectrometer devices. As an example, a volume of the portable spectrometer device may not exceed 0.001 m³ and/or the weight of the portable spectrometer device may not exceed 1 kg.

The portable spectrometer device comprises at least one optical interface configured for transmitting electromagnetic radiation impinging on the spectrometer device towards an optical detector, such as the optical detector of the spectrometer device as described herein. Specifically, the optical interface may be configured for transmitting the electromagnetic radiation impinging on the spectrometer device towards the optical detector via at least one sample. As an example, the sample may be arranged in between the source of the electromagnetic radiation and the detector, i.e. in an optical path the electromagnetic radiation travels towards the detector. The term "optical interface" as used herein is a broad term and is to be given its ordinary and customary meaning to a person of ordinary skill in the art and is not to be limited to a special or customized meaning. The term specifically may refer, without limitation, to an arbitrary element or a combination of elements suitable for transmitting light towards the optical detector, specifically in a wave-length-dependent manner. The optical interface may be configured for separating the incident electromagnetic radiation, i.e. light, into the spectrum of constituent wavelength components and subsequently transmitting the spectrum onto the detector device. Specifically, the wavelength-dependent transmission of the incident light at the optical interface may result in a spatial separation of the constituent wave-length components of the spectrum which may be transmitted directly or indirectly, e.g. via the sample, onto the detector device.

The portable spectrometer device further comprises the optical detector configured for generating at least one signal in response to the electromagnetic radiation. The term "optical detector" as used herein is a broad term and is to be given its ordinary and customary meaning to a person of ordinary skill in the art and is not to be limited to a special or customized meaning. The term specifically may refer, without limitation, to an optical sensor configured for detecting or measuring electromgnetic radiation, such as for detecting an illumination and/or a light spot generated by at least one light beam and/or ray of light. The optical detector may specifically comprise at least one photosensitive region. The photosensitive region may be configured for being illuminated, or in other words for receiving electromagnetic radiation, and for generating at least one signal, such as an electronic signal, in response to the illumination. The photosensitive region may be located on a surface of the optical detector. The photosensitive region may specifically be a single, closed, uniform photosensitive region. However, other options may also be feasible.

The portable spectrometer device further comprises at least one spectrometer control unit for evaluating the at least one signal. Specifically, the spectrometer control unit may be configured for evaluating the signal generated by the optical detector in response to the electromagnetic radiation. The term "spectrometer control unit" as used herein is a broad term and is to be given its ordinary and customary meaning to a person of ordinary skill in the art and is not to be limited to a special or customized meaning. The term specifically may refer, without limitation, to an arbitrary device designed to generate the desired items of information, i.e. the at least one item of information related to the spectrum of the object, from the at least one detector signal. Thus, the spectrometer control unit may be configured for, in response to the at least one detector signal, providing the desired items of information, e.g. in form of a response signal and/or data. As an example, the spectrometer control unit may be or may comprise one or more integrated circuits, such as one or more application-specific integrated circuits (ASICs), and/or one or more data processing devices, such as one or more of computers, digital signal processors (DSP), field programmable gate arrays (FPGA) preferably one or more microcomputers and/or microcontrollers. Additional components may be comprised, such as one or more preprocessing devices and/or data acquisition devices, such as one or more devices for receiving and/or preprocessing of the detector signals, such as one or more AD-converters and/or one or more filters. Further, the spectrometer control unit may comprise one or more data storage devices. Furthermore, the spectrometer control unit may comprise one or more interfaces, such as one or more wireless interfaces and/or one or more wire-bound interfaces. As used herein, the detector signal is generated by the optical detector and provided to the spectrometer control unit. The spectrometer control unit may have further functions, such as being configured for controlling one or more further functions of the spectrometer device, e.g. a connection of one or more of the spectrometers components to a battery or the like.

The portable spectrometer device further comprises at least one battery configured for providing electrical energy to the spectrometer control unit. The term "battery" as used herein is a broad term and is to be given its ordinary and customary meaning to a person of ordinary skill in the art and is not to be limited to a special or customized meaning. The term specifically may refer, without limitation, to an arbitrary energy storage. Specifically the battery may be configured for storing electrical energy and subsequently providing the electrical energy to one or more electrical component of the spectrometer device, e.g. to one or more of the spectrometer control unit and the optical detector.

The spectrometer kit further comprises at least one sensor. The sensor is configured for generating at least one sensor signal in response to at least one condition of the spectrometer device. The term "sensor" as used herein is a broad term and is to be given its ordinary and customary meaning to a person of ordinary skill in the art and is not to be limited to a special or customized meaning. The term specifically may refer, without limitation, to an arbitrary element or device configured for one or more of detecting, measuring or monitoring at least one measurement variable or measurement property. Specifically, the sensor may be capable of generating at least one sensor signal, such as a measurement signal, e.g. an electrical signal, which is a qualitative or quantitative indicator of the measurement variable and/or measurement property. As an example, the sensor may be or may comprise a device configured for detecting at least one condition and/or for measuring at least one measuring variable of the spectrometer device and for generating the at least one sensor signal corresponding to the detected condition or the measured variable of the spectrometer device.

The spectrometer kit further comprises the spectrometer case, e.g. the portable spectrometer case. The term "spectrometer case" as used herein is a broad term and is to be given its ordinary and customary meaning to a person of ordinary skill in the art and is not to be limited to a special or customized meaning. The term specifically may refer, without limitation, to a device capable of at least partially enclosing a spectrometer device. Specifically, the term may refer to a device, which is configured for housing a spectrometer device. The spectrometer case may also be referred to as "case". The portable spectrometer case may specifically be configured, by its dimensions and/or its weight, for being carried by a user, e.g. with a single hand. Thus, as an example, a volume of the portable spectrometer case may not exceed 0.001 m³ and/or the weight of the portable spectrometer device may not exceed 1 kg.

The spectrometer case comprises at least one cleaning device configured for cleaning at least the optical interface of the spectrometer device, when the spectrometer is received within the spectrometer case. The term "cleaning device" as used herein is a broad term and is to be given its ordinary and customary meaning to a person of ordinary skill in the art and is not to be limited to a special or customized meaning. The term specifically may refer, without limitation, to an arbitrary device, which is configured for removing one or more of particles and fluids, such as dust, debris, chemical residue, moisture or the like, from at least part of the optical interface of the spectrometer device.

The spectrometer case further comprises at least one conditioning device configured for performing at least one conditioning action, wherein the conditioning action comprises, within the spectrometer case, exposing the spectrometer device to a conditioning environment. The term "conditioning device" as used herein is a broad term and is to be given its ordinary and customary meaning to a person of ordinary skill in the art and is not to be limited to a special or customized meaning. The term specifically may refer, without limitation, to an arbitrary device, which is configured for influencing, controlling and/or evaluating at least one property of the atmosphere within the spectrometer case. For this purpose, the conditioning device may comprise one or more effectors for influencing the atmosphere. The conditioning device may comprise further components for influencing, controlling and/or evaluating the interior of the spectrometer case. Thus, as an example, the conditioning device may comprise one or more sensors, e.g. for evaluating the atmosphere within the spectrometer case, and/or one or more integrated circuits, such as one or more application-specific integrated circuits (ASICs), and/or one or more data processing devices, such as one or more of computers, digital signal processors (DSP), field programmable gate arrays (FPGA) preferably one or more microcomputers and/or microcontrollers, such as for controlling the atmosphere within the spectrometer case. Specifically, the atmosphere within the spectrometer case to which the spectrometer device is exposed when received within the spectrometer case.

The spectrometer case further comprises at least one power device configured for charging the battery of the spectrometer device when the spectrometer device is received within the spectrometer case. The term "power device" as used herein is a broad term and is to be given its ordinary and customary meaning to a person of ordinary skill in the art and is not to be limited to a special or customized meaning. The term specifically may refer, without limitation, to an arbitrary charging unit comprising an energy storage. Specifically, the energy storage of the power device may have a bigger capacity than the battery of the spectrometer device.

The sensor may be arranged at least partially within one or both of the spectrometer device and the spectrometer case. Specifically, the sensor may be arranged on and/or within the portable spectrometer device. Additionally or alternatively, the sensor may be arranged on and/or within the spectrometer case, such as at least partially on an interior surface of the spectrometer case. For example, the sensor may be powered by the battery of the spectrometer device and/or by the power device of the spectrometer case. Additionally or alternatively, the sensor may comprise an electrical storage of its own, such as a sensor battery, in order to be independent from power supply of one or both of the spectrometer case and the spectrometer device.

The sensor may specifically be or may comprise one or more of: a temperature sensor, such as a thermometer; a moisture sensor, such as a humidity sensor; an optical sensor, such as a camera and/or the optical detector, e.g. in combination with a radiation source configured for emitting electromagnetic radiation. As an example, the sensor, specifically the optical sensor, may comprise at least one further optical detector, e.g. identical or at least similar to the optical detector of the spectrometer device, and optionally a radiation source, such as a light bulb, LED or the like, configured for emitting electromagnetic radiation.

The spectrometer case may for example comprise at least one base element having at least one cavity configured for at least partially receiving the spectrometer device. For example, the spectrometer case may have an opened state and a closed state. In particular, the spectrometer case, in the closed state, may be configured for at least partially enclosing the spectrometer device within the cavity and, in the opened state, may be configured for allowing access to the cavity of the base element for inserting or extracting the spectrometer device into or from the cavity. Specifically, the base element may be configured for, e.g. by deformation, allowing the spectrometer case to be transitioned from its closed state into its opened state and vice versa.

For example, the base element may be or may comprise one or more silicone or rubber gaskets. As an example, the gasket of the base element may be arranged around at least one opening of the spectrometer case, i.e. the opening through which the spectrometer device may be introduced into the cavity, e.g. to create a seal. Additionally or alternatively, the base element may be configured to attach to the spectrometer device, e.g. via one or more magnets, directly, such that at least part of the spectrometer device forms a lid for, in conjunction with the base element, enclosing another part of the spectrometer device within the spectrometer case, e.g. within the cavity. Such an attachment may also be referred to as a "snap-attach" mechanism.

Additionally or alternatively, the spectrometer case may comprise, specifically for transitioning the spectrometer case from its closed state into its opened state, at least one lid element. As an example, in case the spectrometer case comprises the lid element, the lid element and the base element, in conjunction, may form the cavity configured for receiving and enclosing the spectrometer device.

Specifically, the spectrometer case may further comprise at least one sealing element, such as a sealing ring, for sealing off the cavity when the spectrometer case is in the closed state. In particular, the sealing element may be configured for sealing off the cavity in combination with the spectrometer case comprising the base element without the lid element. Alternatively, the sealing element may be configured for sealing off the cavity in combination with the spectrometer device comprising both the base element and the lid element.

The cleaning device may comprise one or more of an active cleaning component and a passive cleaning component. Specifically, the cleaning device may comprise a combination of active and passive cleaning components.

As an example, the passive cleaning component may comprise one or more elements selected from the group consisting of a wiping element, such as a fabric-covered surface, e.g. a soft, lint-free micro fiber cleaning cloth or special cleaning cloth for optical lenses, or a rubber squeegee; a statically charged surface, e.g. an electrostatic surface configured for collecting dust particles from the optical interface of the spectrometer device. In particular, the wiping element may specifically be configured for wiping a surface, specifically the at least the optical interface, of the spectrometer device during an insertion or extraction movement of the spectrometer device, e.g. by the relative movement of the spectrometer device and the spectrometer case when the spectrometer device is inserted or extracted from the spectrometer case.

For example, the active cleaning component may comprise one or more elements selected from the group consisting of a nozzle, specifically configured for applying pressurized air onto the spectrometer device, e.g. onto the optical interface of the spectrometer device; a suction element, specifically configured for vacuum cleaning the spectrometer device, e.g. the optical interface of the spectrometer device.

Specifically, the active cleaning component may be configured to perform a cleaning action when the sensor indicates the spectrometer to be in a dirty condition.

The cleaning device may be configured for evaluating the sensor signal generated by the sensor to identify when the spectrometer device is in a dirty condition. Additionally or alternatively, the spectrometer kit may comprise at least one micro-controller, e.g. as part of the spectrometer case, configured for evaluating the sensor signal generated by the sensor to identify when the spectrometer device is in a dirty condition. Specifically, the cleaning device and/or micro-controller of the spectrometer kit, may be configured for identifying if and/or when the spectrometer is in the dirty condition by evaluating the detector signal generated by the detector.

The conditioning device may, for example, be configured for adapting the conditioning environment according to one or both of a predetermined conditioning interval and the condition of the spectrometer device. For example, the conditioning device may for example be configured for adapting the conditioning environment according to one or both of the predetermined conditioning interval, such as a preset conditioning schedule; and the condition of the spectrometer device, specifically determined by the conditioning device evaluating the sensor signals generated by the sensor. Specifically, the conditioning device may be configured to adapt the conditioning environment, e.g. the atmosphere within the spectrometer case, by using one or more effectors, such as according to a predetermined conditioning interval and/or according to the current condition of the spectrometer device. Particularly, for determining the condition of the spectrometer device, the conditioning device may be configured for evaluating the sensor signals generated by the sensor, for example by using one or more of its own micro-computers and/or micro-controllers.

As an example, the conditioning device, e.g. comprising one or more micro computers and/or micro controllers as outlined above, and/or a micro controller of the spectrometer kit as also outlined above, may be configured for evaluating the sensor signal generated by the sensor to determine the condition of the spectrometer device and, e.g. by following a predetermined protocol and/or preset instructions, identifying a required conditioning environment and, subsequently, adapting the conditioning environment in the spectrometer case to the required conditioning environment. However, the conditioning device and/or the micro controller may further be configured for identifying when the spectrometer device is damaged, e.g. showing a tear and/or crack, and/or in a condition which may not be reversed by subjecting the spectrometer device to the conditioning environment and, subsequently, triggering a maintenance alert, which may be output by an output device described in further detail below. Specifically, the conditioning device may be configured for evaluating the sensor signal generated by the sensor to determine the optical interface's functionality of unobstructed transmission for electromagnetic radiation. Additionally or alternatively, the conditioning device may be configured for verifying whether the optical interface is in an intact state, such as in a functioning state, e.g. able to unobstructedly transmit electromagnetic radiation, or not, e.g. in case the optical interface comprises one or more cracks and/or other damages obstructing the transmission of electromagnetic radiation.

The conditioning device, specifically in order to create and/or adapt the conditioning environment, may for example comprise at least one element selected from the group consisting of: a heating element; a cooling element; a combined heating and/or cooling element, such as a Peltier element; a ventilation element, e.g. for triggering an air flow across and/or onto at least one surface of the spectrometer device; a drying agent, such as a desiccant, e.g. silica gel; a humidifier and/or a dehumidifier for regulating at least one moisture level.

As an example, the power device may comprise at least one electrical energy storage, wherein the spectrometer case for charging the electrical energy storage may comprise at least one charging interface. Specifically, the charging interface may be one or more of: a plug and/or socket, specifically a socket into which a charging cable is pluggable; an inductive coupling for wireless power transfer; a solar power module for generating electrical energy from solar energy.

The spectrometer case may further comprise at least one calibration device configured for performing at least one calibration of the spectrometer device. For example, the calibration, specifically the calibration which may be performed by the calibration device, may comprise one or more of recalibrating the detector device of the spectrometer device and changing and/or resetting one or more settings of the spectrometer control unit.

The calibration device, e.g. by using its micro-controller, and/or the micro controller of the spectrometer kit, particularly of the spectrometer case, e.g. as outlined above, may be configured for evaluating the sensor signal generated by the sensor to determine whether a calibration of the spectrometer device is required. Additionally or alternatively, the spectrometer device may be configured for performing a predefined calibration test, e.g. by using a predefined calibration target, and the calibration device and/or the micro controller of the spectrometer kit, may be configured for evaluating one or more of the detector signals and a response of the spectrometer control unit, e.g. by comparison to a predetermined response information and subsequently, in case a deviation is determined, performing the at least one calibration of the spectrometer device.

The spectrometer case may further comprise one or more of at least one global system for mobile communication module (GSM module), at least one wifi module, at least one Bluetooth module.

The spectrometer kit may further comprise at least one output device configured for outputting at least one maintenance alert indicating that a maintenance of the spectrometer device is required. For example, the at least one maintenance alert may be output based on detected damages to the spectrometer device and/or based on preset time intervals.

As an example, the output device may be or may comprise a screen arranged on the spectrometer case. Additionally or alternatively, the output device may be a separate device, such as one or more of a computer, e.g. a smartphone, connected to the spectrometer case, e.g. via the GSM module, wifi module and/or Bluetooth module.

The spectrometer case may further comprise at least one battery indicator configured for indicating a charge status of one or more of the power device and the battery of the spectrometer device. Specifically, the battery indicator may be configured for indicating a charge status of one or more of the power device and the battery of the spectrometer device when the spectrometer is received within the spectrometer case.

The spectrometer case may further comprise at least one user input interface. Specifically, the user input interface may be configured for allowing a used to input information into the spectrometer case, e.g. for controlling one or more functions of the spectrometer case and/or for entering personalized information. For example, the user input interface may be in the form of and/or may comprise one or more of: a button and a touch screen, for example arranged on the spectrometer case.

In a further aspect of the present invention, a spectrometer case is proposed. In particular, the spectrometer case may be configured for receiving a portable spectrometer device at least partially within the spectrometer case. For example, the spectrometer case may be configured for housing the spectrometer device. Specifically, the spectrometer case is a spectrometer case as disclosed herein. Thus, for definitions and possible embodiments of the spectrometer case, reference is made to the definitions and embodiments as described with respect to the spectrometer kit.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, nonwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

The spectrometer kit and spectrometer case according to the present invention may provide a large number of advantages over known devices. Specifically, the spectrometer kit and spectrometer case of the present invention may enable the restoration of portable, e.g. hand-held, spectrometer devices to a state conducive to performing high-demand measurement tasks that may have otherwise become unfeasible after prolonged use in the field. In particular, by using the spectrometer kit, specifically the spectrometer case, common challenges faced by portable spectrometer devices, such as degradation in measurement accuracy due to environmental exposure, contamination of optical components, and shifts in calibration caused by temperature or humidity variations or mechanical stress, may be addressed and overcome, allowing for a long lasting high performance of the spectrometer device and ensuring high accuracy and reliability of measurement results. Thus, the spectrometer kit and spectrometer case of the present invention may enable and preserve the measurement capability of the spectrometer device that is crucial for correct, accurate and reliable measurements. Specifically, the spectrometer kit and spectrometer case of the present invention may allow for a partial or full restoration of the spectrometer device to its initial operational capabilities, or, at the very minimum, approach a comparable level whereby resulting in performance as designed.

In particular, the spectrometer kit and spectrometer case of the present invention may enhance user confidence in the spectrometer device's performance. Specifically, the spectrometer kit and spectrometer case of the present invention may ensure that high-quality and accurate measurements can be consistently achieved, even under demanding conditions. Specifically, the spectrometer kit and spectrometer case of the present invention may allow for a reduction or even prevent deterioration in measurement precision of spectrometer devices that otherwise result from environmental exposure, contamination of optical elements, and alterations in calibration due to fluctuations in temperature or humidity, as well as mechanical strain. The invention facilitates the reinstatement of handheld spectrometers to a condition that is conducive to carrying out measurement tasks with elevated requirements, which would otherwise become impracticable after extended use in the field.

For example, the spectrometer case of the present invention, specifically by the cleaning device, may provide a cleaning mechanism, e.g. by incorporating an automated cleaning system that effectively removes contaminants from the optical interface of the spectrometer device, thereby ensuring optimal light transmission and measurement accuracy.

Furthermore, the spectrometer case of the present invention, specifically by the conditioning device and optionally the calibration device, may provide multi-condition calibration and moisture management. In particular, the spectrometer case may facilitate calibrations of the spectrometer device under a variety of conditions, including different calibration targets and ambient temperatures. This adaptability may particularly ensure that the spectrometer device may remain accurate regardless of the operational environment. Furthermore, for example by its ventilation and heating capabilities, the conditioning device of the spectrometer case may allow for actively reducing moisture accumulation within the spectrometer device. This feature may particularly be essential for maintaining performance of the spectrometer device in humid or variable atmospheric conditions.

Furthermore, the spectrometer case of the present invention, specifically by the output device, may allow for maintenance alerts, such as automated alerts for maintenance needs, thereby ensuring that the spectrometer may always be in optimal condition and reducing downtime. In particular, should the maintenance prove unsuccessful, the user may receive a notification, prompting the initiation of a service request with the manufacturer.

In addition, the spectrometer case of the present invention, specifically by the GSM module, e.g. as a GSM data link, may allow for seamless data transmission to a cloud network for evaluation and analysis. In particular, this feature may enable remote monitoring of the spectrometer case and spectrometer device and may additionally facilitate collaboration among users, experts and manufacturer.

Further, the spectrometer case of the present invention, specifically by the power device and optional charging interface, may allow for an in-field recharge capability. Thereby, the spectrometer case may particularly allow users to recharge the spectrometer device in the field, and thus, may ensure that the spectrometer device remains operational without the need for constant access to power sources.

Furthermore, the spectrometer case of the present invention, specifically by being portable, may enable users to transport it, specifically together with the spectrometer device, i.e. as the spectrometer kit, to various locations as needed. This versatility may particularly make the spectrometer kit and spectrometer case of the present invention suitable for fieldwork and diverse application environments.

The spectrometer kit and spectrometer case of the present invention may enhance user confidence in the spectrometer device's performance, e.g. by ensuring that high-quality and accurate measurements can be consistently achieved, even under demanding conditions.

Specifically, the spectrometer kit and spectrometer case of the present invention may be tailored to accommodate the unique tasks associated with portable spectrometer devices, e.g. with mobile spectrometers. Thus, the conditioner case of the present invention may be designed specifically for restoring the spectrometer's functionality for high-demand applications.

Summarizing and without excluding further possible embodiments, the following embodiments may be envisaged:
Embodiment 1. A spectrometer kit comprising
   i) a portable spectrometer device comprising
      - at least one optical interface configured for transmitting electromagnetic radiation impinging on the spectrometer device towards an optical detector, specifically via at least one sample,
      - the optical detector configured for generating at least one signal in response to the electromagnetic radiation,
      - at least one spectrometer control unit for evaluating the at least one signal,
      - at least one battery configured for providing electrical energy to the spectrometer control unit; wherein the spectrometer device is receivable within a portable spectrometer case;
   ii) at least one sensor, wherein the sensor is configured for generating at least one sensor signal in response to at least one condition of the spectrometer device;
   iii) the spectrometer case comprising
      - at least one cleaning device configured for cleaning at least the optical interface of the spectrometer device, when the spectrometer is received within the spectrometer case,
      - at least one conditioning device configured for performing at least one conditioning action, wherein the conditioning action comprises, within the spectrometer case, exposing the spectrometer device to a conditioning environment,
      - at least one power device configured for charging the battery of the spectrometer device when the spectrometer device is received within the spectrometer case.
Embodiment 2. The spectrometer kit according to the preceding embodiment, wherein the sensor is arranged at least partially within one or both of the spectrometer device and the spectrometer case.
Embodiment 3. The spectrometer kit according to any one of the preceding embodiments, wherein the sensor is one or more of: a temperature sensor, such as a thermometer; a moisture sensor, such as a humidity sensor; an optical sensor, such as a camera and/or the optical detector, e.g. in combination with a radiation source configured for emitting electromagnetic radiation.
Embodiment 4. The spectrometer kit according to the preceding embodiment, wherein the sensor, specifically the optical sensor, comprises at least one further optical detector and optionally a radiation source configured for emitting electromagnetic radiation.
Embodiment 5. The spectrometer kit according to any one of the preceding embodiments, wherein the spectrometer case comprises at least one base element having at least one cavity configured for at least partially receiving the spectrometer device, and optionally at least one lid element.
Embodiment 6. The spectrometer kit according to the preceding embodiment, wherein the spectrometer case has an opened state and a closed state, wherein, in the closed state, the spectrometer case is configured for at least partially enclosing the spectrometer device within the cavity and, in the opened state, allowing access to the cavity of the base element for inserting or extracting the spectrometer device into or from the cavity.
Embodiment 7. The spectrometer kit according to the preceding embodiment, wherein the spectrometer case further comprises at least one sealing element, such as a sealing ring, for sealing off the cavity when the spectrometer case is in the closed state.
Embodiment 8. The spectrometer kit according to any one of the preceding embodiments, wherein the cleaning device comprises one or more of an active cleaning component and a passive cleaning component, specifically a combination of active and passive cleaning components.
Embodiment 9. The spectrometer kit according to the preceding embodiment, wherein the passive cleaning component comprises one or more elements selected from the group consisting of a wiping element, such as a fabric-covered surface, e.g. a soft, lint-free micro fiber cleaning cloth or special cleaning cloth for optical lenses, or a rubber squeegee; a statically charged surface, e.g. an electrostatic surface configured for collecting dust particles from the optical interface of the spectrometer device.
Embodiment 10. The spectrometer kit according to the preceding embodiment, wherein the wiping element is configured for wiping a surface, specifically the at least the optical interface, of the spectrometer device during an insertion or extraction movement of the spectrometer device, e.g. by the relative movement of the spectrometer device and the spectrometer case when the spectrometer device is inserted or extracted from the spectrometer case.
Embodiment 11. The spectrometer kit according to any one of the three preceding embodiments, wherein the active cleaning component comprises one or more elements selected from the group consisting of a nozzle, specifically configured for applying pressurized air onto the spectrometer device, e.g. onto the optical interface of the spectrometer device; a suction element, specifically configured for vacuum cleaning the spectrometer device, e.g. the optical interface of the spectrometer device.
Embodiment 12. The spectrometer kit according to any one of the four preceding embodiments, wherein the active cleaning component is configured to perform a cleaning action when the sensor indicates the spectrometer to be in a dirty condition.
Embodiment 13. The spectrometer kit according to any one of the five preceding embodiments, wherein the cleaning device and/or a micro-controller of the spectrometer kit is configured for identifying if and/or when the spectrometer device is in a dirty condition by evaluating the sensor signal generated by the sensor.
Embodiment 14. The spectrometer kit according to any one of the six preceding embodiments, wherein the cleaning device and/or a micro-controller of the spectrometer kit, specifically the micro-controller of the spectrometer kit according to embodiment 13, is configured for evaluating the detector signal generated by the detector, specifically in case the sensor is an optical sensor, to identify when the spectrometer is in the dirty condition.
Embodiment 15. The spectrometer kit according to any one of the preceding embodiments, wherein the conditioning device is configured for adapting the conditioning environment according to one or both of a predetermined conditioning interval, such as a preset conditioning schedule; and the condition of the spectrometer device, specifically determined by the conditioning device evaluating the sensor signals generated by the sensor.
Embodiment 16. The spectrometer kit according to the preceding embodiment, wherein the conditioning device and/or a micro controller of the spectrometer kit, specifically the micro-controller of the spectrometer kit according to embodiment 12, is configured for determining the condition of the spectrometer device by evaluating the sensor signal generated by the sensor.
Embodiment 17. The spectrometer kit according to any one of the preceding embodiments, wherein the conditioning device, specifically in order to create and/or adapt the conditioning environment, comprises at least one element selected from the group consisting of a heating element; a cooling element; a combined heating and/or cooling element, such as a Peltier element; a ventilation element, e.g. for triggering an air flow across and/or onto at least one surface of the spectrometer device; a drying agent, such as a desiccant, e.g. silica gel; a humidifier and/or a dehumidifier for regulating at least one moisture level.
Embodiment 18. The spectrometer kit according to any one of the preceding embodiments, wherein the power device comprises at least one electrical energy storage, wherein the spectrometer case for charging the electrical energy storage comprises at least one charging interface, wherein the charging interface is one or more of a plug and/or socket, specifically a socket into which a charging cable is pluggable; an inductive coupling for wireless power transfer; a solar power module for generating electrical energy from solar energy.
Embodiment 19. The spectrometer kit according to the any one of the preceding embodiments, wherein the spectrometer case further comprises at least one calibration device configured for performing at least one calibration of the spectrometer device, for example the calibration comprises one or more of recalibrating the detector device of the spectrometer device and changing and/or resetting one or more settings of the spectrometer control unit.
Embodiment 20. The spectrometer kit according to the preceding embodiment, wherein the calibration device and/or a micro-controller of the spectrometer kit, specifically the micro-controller according to embodiment 13, is configured for evaluating the sensor signal generated by the sensor to determine whether a calibration of the spectrometer device is required.
Embodiment 21. The spectrometer according to any one of the two preceding embodiments, wherein the spectrometer device is configured for performing a predefined calibration test, e.g. by using a predefined calibration target, and the calibration device and/or the micro controller of the spectrometer kit, specifically the micro-controller of the spectrometer kit according to embodiment 13, is configured for evaluating one or more of the detector signals and a response of the spectrometer control unit, e.g. by comparison to a predetermined response information and subsequently, in case a deviation is determined, performing the at least one calibration of the spectrometer device.
Embodiment 22. The spectrometer kit according to any one of the preceding embodiments, wherein the spectrometer case further comprises one or more of at least one global system for mobile communication module (GSM module), at least one wifi module, at least one Bluetooth module.
Embodiment 23. The spectrometer kit according to any one of the preceding embodiments, further comprising at least one output device configured for outputting at least one maintenance alert indicating that a maintenance of the spectrometer device is required, e.g. based on detected damages to the spectrometer device and/or on preset time intervals.
Embodiment 24. The spectrometer kit according to the preceding embodiment, wherein the output device comprises one or more of a screen arranged on the spectrometer case and a separate device, such as one or more of a computer, e.g. a smartphone, connected to the spectrometer case, e.g. via the GSM module, wifi module and/or Bluetooth module.
Embodiment 25. The spectrometer kit according to any one of the preceding embodiments, wherein the spectrometer case further comprises at least one battery indicator configured for indicating a charge status of one or more of the power device and the battery of the spectrometer device, specifically when the spectrometer is received within the spectrometer case.
Embodiment 26. The spectrometer kit according to any one of the preceding embodiments, wherein the spectrometer case further comprises at least one user input interface, e.g. in the form of one or more of a button and a touch screen, for example arranged on the spectrometer case.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figures 1 and 2: show different embodiments of a spectrometer kit in a perspective view; and
- Figure 3: shows an embodiment of a spectrometer case in a perspective view.
Detailed description of the embodiments

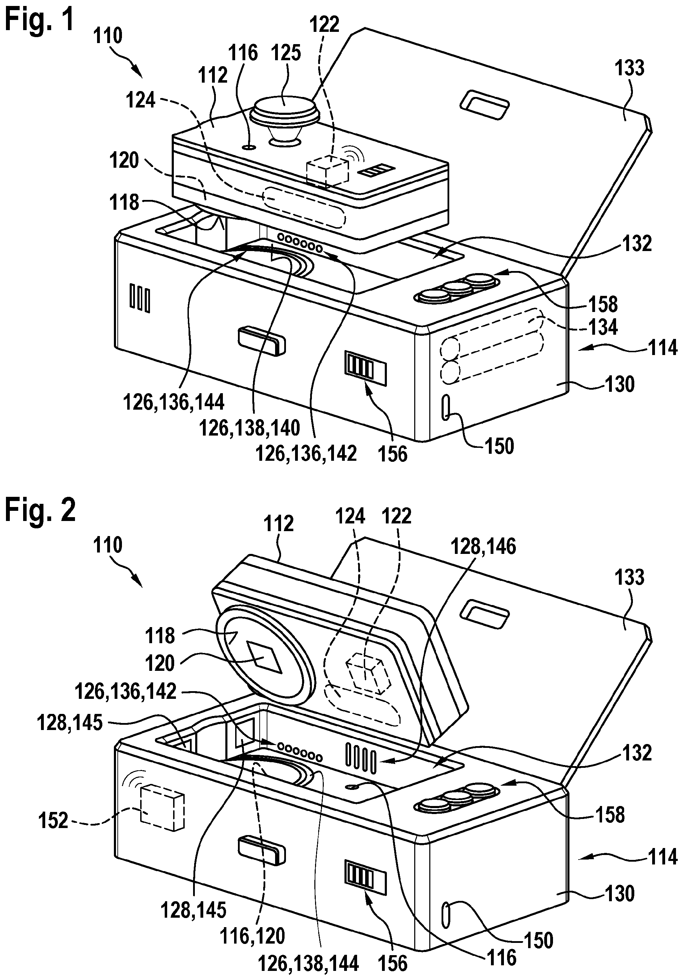

Figures 1 and 2 show a perspective view of different embodiments of a spectrometer kit 110 with an embodiment of a portable spectrometer device 112 and an embodiment of a spectrometer case 114. The portable spectrometer device 112 is receivable within the spectrometer case 114.

Further, the spectrometer kit 110 comprises at least one sensor 116 configured for generating at least one sensor signal in response to at least one condition of the spectrometer device 112. Specifically, the sensor may be arranged at least partially within one or both of the spectrometer device 112 and the spectrometer case 114. As an example, the at least one sensor 116 may be arranged within the spectrometer device 112. This arrangement may be illustrated in Figure 1. Additionally or alternatively, the at least one sensor 116 may be arranged within the spectrometer case 114. This arrangement may be illustrated in Figure 2.

The portable spectrometer device 112 comprises at least one optical interface 118 configured for transmitting electromagnetic radiation impinging on the spectrometer device 112 towards an optical detector 120, specifically via at least one sample (not illustrated). The spectrometer device 112 further comprises the optical detector 120, which is configured for generating at least one signal in response to the electromagnetic radiation. The spectrometer device 112 further comprises at least one spectrometer control unit 122 for evaluating the at least one signal. Furthermore, the spectrometer device 112 comprises at least one battery 124 configured for providing electrical energy to the spectrometer control unit 122. Optionally, e.g. in order to facilitate one-handed handling, the spectrometer device 112 may further comprise at least one handle 125.

The spectrometer case 114 comprises at least one cleaning device 126 configured for cleaning at least the optical interface 118 of the spectrometer device 112, when the spectrometer 112 is received within the spectrometer case 114. The spectrometer case 114 further comprises at least one conditioning device 128 configured for performing at least one conditioning action, wherein the conditioning action comprises, within the spectrometer case 114, exposing the spectrometer device 112 to a conditioning environment. In particular, the spectrometer case 114 may comprise at least one base element 130 having at least one cavity 132 configured for at least partially receiving the spectrometer device 112. Optionally, the spectrometer case 114 comprises at least one lid element 133, e.g. additionally having a clasp, as exemplarily illustrated in the Figures. However, an embodiment in which, for example, the base element 130 alone, e.g. without the lid element 133, may be configured for receiving and at least partially enclosing the spectrometer device 112 within the cavity 132 is also feasible though not illustrated in the Figures. Furthermore, the spectrometer case 114 comprises at least one power device 134 configured for charging the battery 124 of the spectrometer device 112 when the spectrometer device 112 is received within the spectrometer case 114.

The sensor 116 may for example be or may comprise one or more of a temperature sensor , such as a thermometer; a moisture sensor, such as a humidity sensor; an optical sensor, such as a camera and/or the optical detector 120, e.g. in combination with a radiation source configured for emitting electromagnetic radiation. Specifically, in case the at least one sensor 116 is arranged within the spectrometer case 114, the spectrometer case 114 may further comprise an optical detector 120, for example, similar to the optical detector 120 of the spectrometer device 112. The optical detector 120 of the spectrometer case 114 may, as exemplary indicated in Figure 2, be arranged next to the cleaning device 126. In particular, the spectrometer kit 110 may comprise multiple sensors 116.

For example, the cleaning device 126 of the spectrometer case 114 may comprise one or more of an active cleaning component 136 and a passive cleaning component 138. Specifically, the cleaning device may comprise a combination of active 136 and passive 138 cleaning components. As an example, the passive cleaning component 138 may be a wiping element 140, such as a fabric-covered surface. This set-up is illustrated in Figure 1. However, other embodiments of passive cleaning components 138, such as a wiping element in form of a rubber squeegee, an electrostatic surface or the like, are also feasible. The active cleaning component 136, in particular, may be or may comprise at least one nozzle 142, specifically configured for applying pressurized air onto the spectrometer device 112, e.g. onto the optical interface 118 of the spectrometer device 112. Additionally or alternatively, the active cleaning component 136 may be or may comprise a suction element 144, specifically configured for vacuum cleaning the spectrometer device 112, e.g. the optical interface 118 of the spectrometer device 112. As an example, the suction element 144 may be arranged next to or around the wiping element 140 thereby, not only vacuum cleaning the optical interface 118 of the spectrometer device 112 when arranged in the cavity 130 of the spectrometer case 114, but also able to vacuum clean debris and/or dust from the wiping element 140, e.g. subsequently. Furthermore, a plurality of the nozzles 142 may be arranged such that the pressurized air may be able to brush over the interface 118 of the spectrometer device 112 when received in the spectrometer case 114 in order to clean the interface 118. These set-ups are illustrated in all Figures. However, other arrangements are feasible.

In particular, the active cleaning components 136 may be configured for performing the cleaning action, i.e. applying pressurized air and/or vacuum cleaning, only when the sensor 116 indicates that the spectrometer 112 is in a dirty condition. For this purpose, the cleaning device 126 may be configured for evaluating the sensor signal generated by the sensor 116 to identify when the spectrometer device 112 is in a dirty condition.

The conditioning device 128 of the spectrometer case 114 may further be configured for adapting the conditioning environment, e.g. in the cavity 132, according to one or both of a predetermined conditioning interval, such as a preset conditioning schedule; and the condition of the spectrometer device 112. Specifically, additionally or alternatively to the cleaning device 126, the conditioning device 128 may be configured for determining the condition of the spectrometer device 112, e.g. by evaluating the sensor signal generated by the sensor 116. Thus, the conditioning device 128 may be configured for adapting the conditioning environment for the spectrometer device 112 in the cavity 132 of the base element 130 according to the condition of the spectrometer device 112 as determined by the conditioning device 128 itself, by the cleaning device 126 or by any other device, for example a micro-processor of the spectrometer kit 110, able for evaluating the sensor signals generated by the sensor 116.

Specifically, the conditioning device 128 may be configured for adapting the conditioning environment by making use of one or more elements, such as a heating element, a cooling element; a combined heating and/or cooling element, such as a Peltier element 145; a ventilation element 146, e.g. for triggering an air flow across and/or onto at least one surface of the spectrometer device 112; a drying agent, such as a desiccant, e.g. silica gel; a humidifier and/or a dehumidifier 148 for regulating at least one moisture level. Combinations of these elements and/or other arrangements than the illustrated arrangements are feasible.

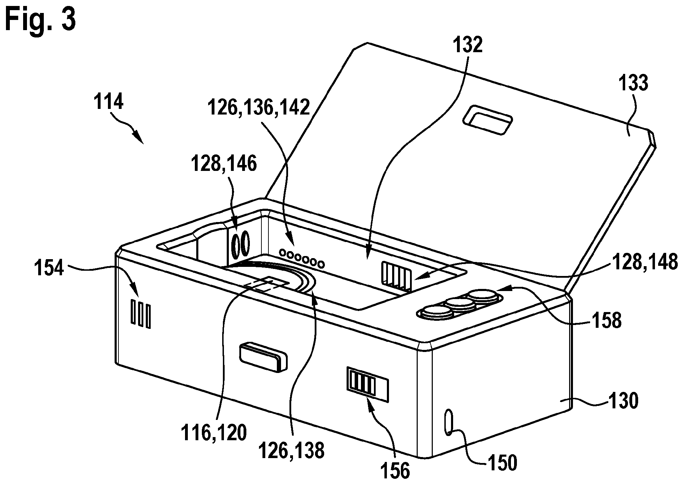

The power device 134 may comprise at least one electrical energy storage, wherein the spectrometer case 114, for charging the electrical energy storage of the power device 134, may comprise at least one charging interface 150. The charging interface 150 may, for example, be a plug and/or socket, specifically a socket into which a charging cable is pluggable, as exemplarily illustrated is Figures 1 to 3. However, other embodiments of the charging interface, such as an inductive coupling for wireless power transfer and/or a solar power module for generating electrical energy from solar energy may also be feasible.

Furthermore, the spectrometer case 114 may comprise at least one calibration device 152 configured for performing at least one calibration of the spectrometer device 112. For example, the calibration may comprise one or more of recalibrating the detector device 120 of the spectrometer device 112 and changing and/or resetting one or more settings of the spectrometer control unit 122. In particular, the calibration may be performed wirelessly, thus, the calibration device 152 as well as one or both of the detector device 120 and the spectrometer control unit 122 may be able to communication wirelessly, as indicated in Figures 1 and 2.

Further, even though not illustrated in the Figures, the spectrometer case 114 may comprise one or more of at least one global system for mobile communication module (GSM module), at least one wifi module and at least one Bluetooth module. Additionally or alternatively, on the spectrometer case 114, an output device 154 of the spectrometer kit 110 may be arranged, such as a loudspeaker, screen or the like, configured for outputting at least one maintenance alert indicating that a maintenance of the spectrometer device 112 is required, e.g. based on detected damages to the spectrometer device 112 and/or on preset time intervals.

The spectrometer case 114 may further comprise at least one battery indicator 156 configured for indicating a charge status of one or more of the power device 134 and the battery 124 of the spectrometer device 112, specifically when the spectrometer 112 is received within the spectrometer case 134. Additionally or alternatively, the spectrometer case 114 may further comprise at least one user input interface 158, e.g. in the form of one or more of a button and a touch screen, for example arranged on the spectrometer case 114.

### List of reference numbers

- 110: spectrometer kit
- 112: spectrometer device
- 114: spectrometer case
- 116: sensor
- 118: optical interface
- 120: optical detector
- 122: control unit
- 124: battery
- 125: handle
- 126: cleaning device
- 128: conditioning device
- 130: base element
- 132: cavity
- 133: lid element
- 134: power device
- 136: active cleaning component
- 138: passive cleaning component
- 140: wiping element
- 142: nozzle
- 144: suction element
- 145: Peltier element
- 146: ventilation element
- 148: dehumidifier
- 150: charging interface
- 152: calibration device
- 154: output device
- 156: battery indicator
- 158: user input interface

## Claims

1. A spectrometer kit (110) comprising
i) a portable spectrometer device (112) comprising
- at least one optical interface (118) configured for transmitting electromagnetic radiation impinging on the spectrometer device towards an optical detector (120),
- the optical detector (120) configured for generating at least one signal in response to the electromagnetic radiation,
- at least one spectrometer control unit (122) for evaluating the at least one signal,
- at least one battery (124) configured for providing electrical energy to the spectrometer control unit (122);
wherein the spectrometer device (112) is receivable within a portable spectrometer case (114);
ii) at least one sensor (116), wherein the sensor (116) is configured for generating at least one sensor signal in response to at least one condition of the spectrometer device (112);
iii) the spectrometer case (114) comprising
- at least one cleaning device (126) configured for cleaning at least the optical interface (118) of the spectrometer device (112), when the spectrometer device (112) is received within the spectrometer case (114),
- at least one conditioning device (128) configured for performing at least one conditioning action, wherein the conditioning action comprises, within the spectrometer case (114), exposing the spectrometer device (112) to a conditioning environment,
- at least one power device configured for charging the battery of the spectrometer device when the spectrometer device is received within the spectrometer case.

2. The spectrometer kit (110) according to the preceding claim, wherein the sensor (116) is arranged at least partially within one or both of the spectrometer device (112) and the spectrometer case (114).

3. The spectrometer kit (110) according to any one of the preceding claims, wherein the sensor (116) is one or more of: a temperature sensor; a moisture sensor; an optical sensor.

4. The spectrometer kit (110) according to any one of the preceding claims, wherein the spectrometer case (114) comprises at least one base element (130) having at least one cavity (132) configured for at least partially receiving the spectrometer device (112), wherein, in a closed state, the spectrometer case (114) is configured for at least partially enclosing the spectrometer device (112) within the cavity (132) and, in an opened state, allowing access to the cavity (132) of the base element (130) for inserting or extracting the spectrometer device (112) into or from the cavity (132).

5. The spectrometer kit (110) according to any one of the preceding claims, wherein the cleaning device (126) comprises one or more of an active cleaning component (136) and a passive cleaning component (138).

6. The spectrometer kit (110) according to the preceding claim, wherein the passive cleaning component (138) comprises one or more elements selected from the group consisting of a wiping element (140) and a statically charged surface.

7. The spectrometer kit (110) according to any one of the two preceding claims, wherein the active cleaning component (136) comprises one or more of a nozzle (142) and a suction element (144).

8. The spectrometer kit (110) according to any one of the three preceding claims, wherein the active cleaning component (136) is configured to perform a cleaning action when the sensor (116) indicates the spectrometer device (112) to be in a dirty condition.

9. The spectrometer kit (110) according to any one of the preceding claims, wherein the conditioning device (128) is configured for adapting the conditioning environment according to one or both of a predetermined conditioning interval; and the condition of the spectrometer device (112).

10. The spectrometer kit (110) according to any one of the preceding claims, wherein the conditioning device (128) comprises at least one element selected from the group consisting of a heating element; a cooling element; a combined heating and/or cooling element; a ventilation element (146); a drying agent.

11. The spectrometer kit (110) according to any one of the preceding claims, wherein the power device (134) comprises at least one electrical energy storage, wherein the spectrometer case (114) for charging the electrical energy storage comprises at least one charging interface (150), wherein the charging interface (150) is one or more of a plug and/or socket; an inductive coupling for wireless power transfer; a solar power module for generating electrical energy from solar energy.

12. The spectrometer kit (110) according to the any one of the preceding claims, wherein the spectrometer case (114) further comprises at least one calibration device (152) configured for performing at least one calibration of the spectrometer device (112), for example the calibration comprises one or more of recalibrating the detector device (120) of the spectrometer device (112) and changing and/or resetting one or more settings of the spectrometer control unit (122).

13. The spectrometer kit (110) according to any one of the preceding claims, wherein the spectrometer case (114) further comprises one or more of at least one global system for mobile communication module (GSM module), at least one wifi module, at least one Bluetooth module.

14. The spectrometer kit (110) according to any one of the preceding claims, further comprising at least one output device (154) configured for outputting at least one maintenance alert indicating that a maintenance of the spectrometer device (112) is required.

15. The spectrometer kit (110) according to any one of the preceding claims, wherein the spectrometer case (114) further comprises at least one user input interface (158).
